# EUROPEAN PATENT SPECIFICATION

(11) **EP 3 841 881 B1**
(45) Date of publication and mention of the grant of the patent: **13.08.2025**
(21) Application number: 18931190.5
(22) Date of filing: 14.11.2018
(51) Int. Cl.: A01N 63/22, A01N 25/14, A01N 25/10, A01N 25/30, A01P 5/00

(54) **COMPOSITION FOR BIOLOGICAL CONTROL OF PHYTONEMATODES**
ZUSAMMENSETZUNG ZUR BIOLOGISCHEN BEKÄMPFUNG VON PHYTONEMATODEN
COMPOSITION POUR LUTTE BIOLOGIQUE CONTRE LES PHYTONÉMATODES

(30) Priority: 20.08.2018 BR 102018016976
(43) Date of publication of application: 30.06.2021
(73) Proprietor: Agrivalle Brasil Industria e Comércio de Produtos Agrícolas Ltda, 13320-000 Salto / SP (BR)
(72) Inventor: BERNARDO, Eduardo Roberto de Almeida, 13331-284 Indaiatuba / SP (BR); ZUCCHI, Tiago Domingues, 13331-100 Indaiatuba / SP (BR); MARTINS, Thales Facanali, 13333-515 Indaiatuba / SP (BR); GORGULHO, Camila, 13331-284 Indaiatuba / SP (BR)
(74) Representative: Pereira Garcia, João Luís
(86) International application number: PCT/BR2018/050424
(87) International publication number: WO 2020/037384

(56) References cited:
- WO-A1-2012/020014
- WO-A1-2012/020014
- WO-A1-2018/045063
- WO-A1-2018/045063
- CN-A- 105 367 305
- US-A1- 2003 082 165
- VENKATESAN PARKUNAN: "Induced disease resistance elicited by acibenzolar-S-methyl and plant growth-promoting rhizobacteria in tobacco (Nicotiana tabacum L.)", 15 September 2008 (2008-09-15), Virginia Polytechnic Institute and State University, Blacksburg, Virginia, U.S.A., pages 1 - 188, XP055083748, Retrieved from the Internet <URL:http://scholar.lib.vt.edu/theses/available/etd-09262008-175116/unrestricted/Dissertation_Venkatesan_Parkunan.pdf> [retrieved on 20131014]
- BURKETT-CADENA M ET AL: "Suppressiveness of root-knot nematodes mediated by rhizobacteria", BIOLOGICAL CONTROL, SAN DIEGO, CA, US, vol. 47, no. 1, 1 October 2008 (2008-10-01), pages 55 - 59, XP025425928, ISSN: 1049-9644, [retrieved on 20080729], DOI: 10.1016/J.BIOCONTROL.2008.07.008
- PAULI GIULIANO: "Bacillus subtilis e Bacillus licheniformis no controle de nematoides", 15TH SICONBIOL SIMPÓSIO DE CONTROLE BIOLÓGICO: RESUMOS DOS PALESTRANTES BRASILEIROS, BOOK OF ABSTRACTS, 4 June 2017 (2017-06-04), Ribeirão Preto/SP, Brazil, pages 1 - 155, XP055908584, ISBN: 978-85-9405-400-5, Retrieved from the Internet <URL:http://www.adaltech.com.br/anais/siconbiol2017/arquivos/palestras.pdf> [retrieved on 20220404]
- MASCIA, RODRIGO: "Bacillus amyloliquefaciens e Trichoderma harzianum no manejo de Pratylenchus brachyurus e Helicotylenchus sp. na cultura da soja", DISSERTAÇÃO DE MESTRADO, 13 March 2017 (2017-03-13), XP055659516
- PEREZ-GARCIA, A. ET AL.: "Plant protection and stimulation by microorganisms: biotechnological applications of Bacilli in agriculture", CURRENT OPINION IN BIOTECHNOLOGY, vol. 22, 2011, pages 187 - 193, XP055236081, DOI: 10.1016/j.copbio.2010.12.003

## Description

### TECHNICAL FIELD OF THE INVENTION

The present patent application is directed to a composition for the biological control of phytonematodes, more particularly to a composition of bacteria with nematicidal effects in damage mitigation and control of phytonematodes in cultivable plants. Pertaining to the technical field of biotechnology, this composition increases the specific efficiency of these microorganisms for means of mechanisms performing different and complementary actions. Particularly, the composition is a formulation using *'Bacillus subtilis', 'Bacillus licheniformis'* and *'Bacillus amyloliquefaciens'.*

### DESCRIPTION OF THE INVENTION

In the current world-wide agricultural scenario, the production profits have been many times associated to the gradual productivity increases without a corresponding increase in the cultivable area. Such productivity increases have been attained by means of significant advances in the cultivation techniques, use of varieties which are more suited to biotic and abiotic factors, adequacy of the nutritional need of the plant and, nevertheless, the mitigation of damages caused by agricultural pests.

Amongst such advances, the pest control is still considered as the biggest challenge in the maintenance of crop productivity, wherein several techniques can be employed, with a higher or lower degree of efficiency, but generally the use of chemical defensives is the most used method.

However, for the control of phytonematodes, the use of agrochemicals has frequently shown unsatisfactory results, and additionally the excessive use of chemical nematicides has frequently caused intoxication of humans and/or animals, concomitantly with the contamination of the environment. Such events have led to an increase of the public opinion on the use of nematicides, and consequently, to a never-ending search for safer handling techniques.

Thus, alternative controls for phytonematodes have been employed whenever possible, but adversities inherent to the biology of said organisms usually make the use of some techniques unfeasible. For example, varieties of resistant cultivars are hardly available, while the rotation culture is impracticable by virtue of the costs or the wide range of hosts for some species (Bird et al., 2003).

In this context, the biological control of phytonematodes by using microorganisms is considered as a viable option. Its main advantage, compared to other technologies, is again the possibility of exploring different ways of action of agrochemicals (Zucchi et al. 2008). Indeed, mechanisms of action such as antagonism and parasitism have been widely used in commercial products.

Antagonism is usually the predominant action of bacteria. In addition to the direct effect on the mortality of phytonematodes, such nematicidal compounds can act directly on the emergence of eggs or mobility of nematodes, and also cause indirect effects such as changes in root exudates or induction of resistance (Sikora & Hoffmann-Hergarten, 1992;Hasky-Günther et al. 1998).

The use of bacteria as biological control agents is more promising in the case of endoparasites phytonematodes (Hallmann et al. 2004) such as, for example, *Meloidogyne graminicola. Bacillus megaterium* reduced 40% of the penetration and formation in boughs of such phytonematodes in rice roots, besides diminishing 60% of its migration to rhizosphere and reducing 60% the emergence of eggs (Sikora & Padgham 2007). Higaki & Araujo (2012), the use of *Bacillus subtilis* for the control of *Pratylenchus brachyurus* was as good as the chemical treatment using Abamectin, which result was extremely small populations of such phytonematodes in the soil, about 1 phytonematode/cm soil, reducing about 90% of this population in view of the standard treatment.

Other results in this line of research, also using *Bacillus subtilis* for treating seeds, is evidenced by Higaki & Araujo (2012), showing that this alternative handling technique caused reductions in the order of 53.87% of the population of *Pratylenchus spp.* 30 days after sowing, adding 18% in productivity.

Similar results had been attained by Higaki (2012) using *Bacillus subtilis* for controlling *Rotylenchulus reniformis* and *Pratylenchus brachyurus* in cotton plants, said treatment using microorganism resulting in reductions higher than 50% in the population of said phytonematodes in the roots of the crop.

Other interesting data reported by the author is that the plants treated with said microorganism exhibited increments in the fresh mass of roots and in the aerial portion in the order of 36 and 47%, respectively, in view of the standard treatment. In accordance with Araújo et al. (2008), the mechanisms of action responsible for the promotion of plant growth can be linked initially to the direct inhibition of the pathogen and induction of systemic resistance, amongst others. It is usually difficult to recognize the mechanisms and associate same with the direct growth promotion, since more than one mechanism is produced by the bacteria.

Despite these advantages, most of the existing products are based on the premise of exploring a single microorganism to control phytonematodes. As disclosed, some biological control agents have more than one mechanism of action which can act directly or indirectly on the target phytonematode. However, associations among several biological control agents, thus extending the spectrum of action of such microorganisms against phytonematodes, have not been widely explored yet.

### ANALYSIS OF THE STATE OF THE ART

In a research conducted in specialized data bases, documents related to the composition for the biological control of phytonematodes have been found. One of said documents, US No. 20150050258, is related to a composition comprising *Bacillus subtilis* (DSM 17231) and *Bacillus licheniformis* (DSM 17236) having a nematicidal effect against phytonematodes in plants and/or the habitat thereof, the use thereof, and a process for the preparation thereof, the use of *Bacillus subtilis* (DSM 17231) and *Bacillus licheniformis* (DSM 17236), and processes to control, fight and provide specific resistance to phytonematodes, and a kit. Also WO2012/020014 and WO2018/045063 disclose methods of controlling phytopathogenic nematodes with a combination comprising *Bacillus subtilis* and *Bacillus licheniformis.*

This approach seems to be more efficient, since it increases synergically the individual effect of each isolate. The disadvantage is that it is based only on antibiose for the control of the target pest, what may occasionally lead to the selection of resistant individuals. Despite this, these examples illustrate a possible trend in the biological control of phytonematodes, that is, the use of complex biological compositions to mitigate the deleterious effect of said organisms.

### OBJECTS OF THE INVENTION

The present invention refers to a composition consisting of *Bacillus subtilis*, *Bacillus licheniformis*, *Bacillus amyloliquefaciens*, concomitantly with additives and excipients, as defined in the appended claims. The compositions have nematicidal properties for the control of phytonematodes in plants. Thus, the object of the present invention is to develop compositions having more than one mechanism of action which are effective against phytonematodes. Said compositions involve the use of different species of bacteria (antibiose, egg parasitism and reduced phytonematode ability of orientation).

### ADVANTAGES ATTAINED

With the composition for biological control of phytonematodes thus obtained, the following advantages can be attained:
- it is an alternative use to chemical nematicides, thus meeting the interest of the society for more environmentally benign products;
- it explores a wider range of mechanisms of action against phytonematodes, thus assuring a higher efficiency;
- it diminishes the selection of phytonematodes resistance to chemicals; and
- it provides a versatile application (using plantation furrows, planting bars and/or seed treatment), facilitating its use in several planting systems.

### DESCRIPTION OF THE INVENTION

The present patent application is related to a "COMPOSITION FOR BIOLOGICAL CONTROL OF PHYTONEMATODES", more precisely a composition of bacteria with nematicidal effects in damage mitigation and control of phytonematodes on cultivable plants.

According to present invention, the composition for biological control of phytonematodes comprises the following microorganisms at a concentration in colony forming units per gram (c.f.u./g):
- *Bacillus subtilis -* 1.0 x 10¹⁰ c.f.u./g
- *Bacillus licheniformis -* 1.0 x 10¹⁰ c.f.u./g
- *Bacillus amyloliquefaciens -* 1.0 x 10⁶ c.f.u./g

The isolates were identified and classified by the Coleção Brasileira de Microorganisms de Ambiente e Indústria (CBMAI/UNICAMP), where they have been deposited.

The composition has the following concentrations:

| | |
|---|---|
| *Bacillus subtilis* | 1.0 to 20.0% |
| *Bacillus licheniformis* | 1.0 to 20.0% |
| *Bacillus amyloliquefaciens* | 1.0 to 10.0% |
| Additives | 1.0 to 20.0% |
| Excipients | 95.0 to 10.0% |

The composition according to the invention further comprises additives selected from the group consisting of dispersants chosen from the group consisting of water-soluble ionic polymers, water-soluble anionic polymers, surfactants selected from the group consisting of anionic surfactants and non-ionic surfactants, and the combinations thereof.

The composition according to the invention further comprises excipients selected from the group that consists of: silicas, talc, bentonite, carbohydrates, carbonates, casein, milk serum and powder milk, and the combinations thereof.

The composition should be used as a formulation in a wettable powder. However, other formulations containing said microorganisms such as emulsions, concentrated suspensions, and granules also can be used.

### EXAMPLES

A composition containing 7.0% *Bacillus subtilis, 7.0% Bacillus licheniformis,* 4.5% *Bacillus amyloliquefaciens,* 3.0% acrylic styrene polymer, 1.0% anionic surfactant, and 67.5% inert component was formulated to evaluate its efficiency in the control of phytonematodes. The examples below illustrate the use of this composition:

### Example 1: Control of Meloidogyne incognita in soy plants, using plantation furrows.

### Object

To evaluate the effect under field conditions of the biological formulation containing isolates of Bacillus in the control of *Meloidogyne incognita,* applied to plantation furrows.

### Material and Methods

Experimental layout used: casualized blocks with six treatments and six repetitions (36 portions). The experimental portions were 2.0 m wide (eight cultivation lines) and 4.0 m long, totaling an 8.0 m² area.

Treatments and form of application: The treatments on plantation furrows before the sowing were applied only once. For the application, a CO₂ pressurized costal spray was used, with a constant pressure of 30 PSI, connected to a common lance having a fan type spraying nozzle, and a broth volume equivalent to 100 L.ha⁻¹.

Sampling and evaluation of the effectiveness of the formulation: Soil and root samples were collected randomly, in five different points of the useful portion making out a sample comprising approximately 500 g soil and 100 g of root. Said collections were carried out at a depth of 0-20 cm. For the quantification of eggs and younglets of *M. incognita,* the samples of each experimental portion were sent to the nematology laboratory. The extraction of the target in the soil was carried out through the centrifugal flotation technique in a sucrose solution proposed by Jenkins (1964) in 150 cm³ of the soil, wherein the evaluations were made previously 45 and 60 days after sowing. For the quantification of nematodes in the roots, the liquefier technique proposed by Coolen & D'herde (1972) was used in 10 g of root, said evaluations being made 45 and 60 days after sowing. The reproduction factor, which is the relationship between the final population (Fp) and the initial population (Ip) of phytonematodes, was calculated 45 to 60 after sowing, in accordance with the formula proposed by OOSTENBRINK (1966), where FR=Fp/Ip. When the plants bloomed, the height of 10 plants in the center of each experimental portion was evaluated, by measuring the length of the stem from the soil level to the last leaf of the plant with the aid of a measuring device. To estimate the productivity of the crop in kilograms per hectare, the grains were harvested and weighed in 4 m² and the humidity was set to 13%, on 03/09/2017. When required, the raw data of the evaluations were changed or had their outliers disregarded in order to attain the normality of the data and then they were submitted to the variance analysis. The comparisons between the averages were made through the test Scott-Knott test (p<0.05) (1974) and the effectiveness of the treatments were calculated according to Abbott (1925).

### Results and Discussion

In the previous monitoring and along the evaluations, the presence of natural enemies has not been detected in significant amounts and frequency in the plants of the experimental area, thus making it impossible to estimate the effect of the treatments in a study on the dynamics of this population. Further, it was verified that there was no phytotoxicity caused by the application of the treatments in the study that would compromise the growth and development of soy plants (Table 1).

**- Table 1. Phytotoxicity of the treatments applied to soy plants (Glycine max), cultivar NA 5909 RG, along the evaluations. Uberlândia, MG, 2017.**

| Treatments | Doses | Phytotoxicity / useful portion | | | | |
|---|---|---|---|---|---|---|
| | | 3 DAA | 7 DAA | 10 DAA | 14 DAA | 21 DAA |
| | | M | | | | |
| Standard | - | 0.00 | 0.00 | 0.00 | 0.00 | 0.00 |
| 2. Biological formulation | 25 | 0.00 | 0.00 | 0.00 | 0.00 | 0.00 |
| 3. Biological formulation | 50 | 0.00 | 0.00 | 0.00 | 0.00 | 0.00 |
| 4. Biological formulation | 75 | 0.00 | 0.00 | 0.00 | 0.00 | 0.00 |
| 5. Biological formulation | 100 | 0.00 | 0.00 | 0.00 | 0.00 | 0.00 |
| 6. Biological formulation | 125 | 0.00 | 0.00 | 0.00 | 0.00 | 0.00 |
| Averages | | 0.00 | 0.00 | 0.00 | 0.00 | 0.00 |

| | | | | | | |
|---|---|---|---|---|---|---|
| g.c.p.ha⁻¹: grams of commercial product per hectare; m: phytotoxicity notes (average of four repetitions); DAA: days after application. | | | | | | |

In the plant height evaluation (Table 2), the applied treatments are not statistically differed from the standard, exhibiting height of plants that varied from 38.35 to 39.97 cm. Rhizobacteria can promote the growth of plants (LUZ, 1996), however, in areas highly infested by nematodes, the growth of the plants can be jeopardized and said effect may not be observed.

**- Table 2. Height of soy plants (Glycine max), cultivar NA 5909 RG. Uberlândia, MG, 2017.**

| Treatments | Doses | Height of plant (cm) |
|---|---|---|
| | g p.c. ha⁻¹ | M |
| 1. Standard | - | 39.03a |
| 2. Biological Formulation | 25 | 38.57a |
| 3. Biological Formulation | 50 | 39.28a |
| 4. Biological Formulation | 75 | 39.97a |
| 5. Biological Formulation | 100 | 38.35a |
| 6. Biological Formulation | 125 | 38.77a |
| VC (%) | - | 3.79 |
| Averages | - | 38.99 |

| | | |
|---|---|---|
| g.c.p.ha⁻¹: grams of commercial product per hectare; m: average of 10 plants per useful portion (average of six repetitions); + averages followed by the same letter do not differ from one another in the columns according to Scott-Knott test (p<0.05); Data changed by *√*(*x* + 1.0); VC (%): variation coefficient. | | |

In accordance with Table 3, in connection with the effect of the applied treatments on the number of young and/or adult plants in 150 cm³ of soil, on the 45^{th} day after sowing a significant difference between the treatments could be noticed. Doses of 50, 75, 100, 125 g.c.p.ha⁻¹ of the biological formulation exhibited a higher control compared to other treatments, with an efficiency of up to 86.30%. At the 60^{th} day after sowing, a higher differentiation between the treatments was noticed, with doses of 25 and 50 g.c.p.ha⁻¹ of the biological formulation higher than the standard and doses of 75, 100 and 125 g.c.p.ha⁻¹ statistically higher than all the other treatments and high efficiency ranging from 68.73% to 75.57%. These results indicate a long-lasting effect of the biological formulation in the ground, making possible to better control the pest and, consequently, more protection throughout the cycle of the crop.

**- Table 3. Effect of the applied treatments for controlling nematodes in boughs (Meloidogyne incognita) in soy plants (Glycine max) on the number of young and/or adult plants in 150 cm³ of soil and effectiveness of the treatments along the evaluations. Uberlândia, MG, 2017.**

| Treatments | Doses | Number of young and/or adult plants in 150 cm³ of soil | | | | |
|---|---|---|---|---|---|---|
| | g.c.p.ha⁻¹ | Previous | 45 DAS | | 60 DAS | |
| | | m | M | E (%) | m | E (%) |
| 12. Biological formulation | - | 26.67a | 525.67a | - | 120.33a | - |
| 2. Biological formulation | 25 | 13.33a | 660.00a | 0.00 | 56.00b | 45.28 |
| 3. Biological formulation | 50 | 26.67a | 270.33b | 48.57 | 47.33b | 53.75 |
| 4. Biological formulation | 75 | 26.67a | 391.00b | 25.62 | 25.00c | 75.57 |
| 5. Biological formulation | 100 | 20.00a | 213.33b | 59.42 | 31.67c | 69.06 |
| 6. Biological formulation | 125 | 24.00a | 72.00b | 86.30 | 32.00c | 68,73 |
| VC (%) | | 52.51 | 26.77 | - | 16.84 | - |
| Averages | | 20.44 | 355.39 | - | 49.06 | - |

| | | | | | | |
|---|---|---|---|---|---|---|
| g.cp.ha⁻¹: grams of commercial product per hectare; DAS: days after sowing; m: number of young and/or adult plants in 150 cm³ of soil (average of four repetitions); +averages followed by same letter do not differ from one another in the columns for the Scott-Knott test (p≤0.05); Data changed by 1/√x; E (%): effectiveness of the treatments according to Abbott (1925); VC (%): variation coefficient. | | | | | | |

Table 4 presents the effect of the applied treatments on the number of young and/or adult plants in 10 g of root. It was evidenced that to there was a clear distinction between the treatments on the 45^{th} day after sowing, where it was possible to separate them into two groups: a) treatments at doses of 25 and 50 g.c.p.ha⁻¹ that despite being statistically higher than the standard showed a low efficiency, and b) the group with the treatments at doses of 75, 100 and 125 g.c.p.ha⁻¹ of the biological formulation that showed a higher control efficiency, attaining a reduction in the population of nematodes of up to 66.99% in the roots.

In the evaluation conducted at the 60^{th} day after sowing, the treatment at a dose of 100 g.c.p.ha⁻¹ of the biological formulation showed the highest control efficiency (73.64%) which is significantly superior to the other treatments. Next, doses of 50 and 75 g.c.p.ha⁻¹ also showed a high control efficiency (70.02% and 67.31%, respectively), and the corresponding treatments at doses of 25 and 125 g.c.p.ha⁻¹ showed the lowest efficiencies, even though they were statistically superior to the standard.

The results of the control of nematodes in the root are similar to the results attained in the control of nematodes in the soil (Table 5), where the highest control efficiencies were observed at the 60^{th} day after sowing, indicating the long-term continuous effect of the biological formulation.

**- Table 5. Effect of the applied treatments for controlling nematode in boughs (Meloidogyne incognita) in soy plants (Glycine max) on the number of young and/or adult plants in 10 g of root, and effectiveness of the treatments along the evaluations. Uberlândia, MG, 2017.**

| Treatments | Doses | Number of young and/or adult plants. 10 g of root | | | |
|---|---|---|---|---|---|
| | g.c.p.ha⁻¹ | 45 DAS | | 60 DAS | |
| | | m | E (%) | m | E (%) |
| 1. Standard | - | 237.33a | | 399.67a | |
| 2. Biological formulation | 25 | 193.33b | 18.54 | 204.17b | 48.92 |
| 3. Biological formulation | 50 | 154.66b | 34.83 | 119.83c | 70.02 |
| 4. Biological formulation | 75 | 78.33c | 66.99 | 130.67c | 67.31 |
| 5. Biological formulation | 100 | 130.67c | 44.94 | 105.33d | 73.64 |
| 6. Biological formulation | 125 | 146.67c | 38.20 | 189.00b | 52.71 |
| VC (%) | - | 7.64 | - | 5.17 | |
| Averages | - | 156.83 | - | 191.44 | |

| | | | | | |
|---|---|---|---|---|---|
| g.c.p.ha⁻¹: grams of commercial product per hectare; DAS: days after sowing; m: number of young and/or adult plants in 10 g of root (average of four repetitions); +averages followed by same letter do not differ from one another in the columns for the Scott-Knott test (p≤0.10); Data changed by log x + 1; E (%): effectiveness of the treatments according to Abbott (1925); VC (%): variation coefficient. | | | | | |

The consequences of the control of the nematodes in boughs on the reproduction factor are presented in Table 6, where it is seen that at the 45^{th} day after sowing the standard treatments and biological formulation at a dose of 25 g.c.p.ha⁻¹ were not statistically different from one another. However, doses of 50, 75, 100 and 125 g.c.p.ha⁻¹ showed a significantly higher efficiency, with a reduction in the reproduction factor that varied from 45.33% to 81.66%.

At the 60^{th} day after sowing, the standard treatment and biological formulation at the dose of 25 and 100 g.c.p.ha⁻¹ did not show a significant difference between one another, but only the treatments at doses 50, 75 and 125 g.c.p.ha⁻¹ were significantly superior to the standard, showing a control efficiency between 56.33% and 82.60%.

As to the productivity of the crop, there was no statistical difference between the applied treatments and the standard, but treatments containing the biological formulation at a dose of 100 g.ha⁻¹ provided a 3.42% increment in the productivity of the crop (Table 7).

**- Table 6. Effect of the applied treatments for control of the nematodes in boughs (Meloidogyne incognita) in soy plants (Glycine max) on the reproduction factor, and effectiveness of the treatments along the evaluations. Uberlândia, MG, 2017.**

| Treatments | Doses | Reproduction factor | | | |
|---|---|---|---|---|---|
| | g.c.p.ha⁻¹ | 45 DAS | | 60 DAS | |
| | | M | E (%) | M | E (%) |
| 1. Standard | - | 32.96a | | 19.71a | |
| 2. Biological formulation | 25 | 28.63a | 13.14 | 28.08a | 0.00 |
| 3. Biological formulation | 50 | 12.85b | 60.99 | 3.62b | 81.61 |
| 4. Biological formulation | 75 | 13.82b | 58.06 | 8.61b | 56.33 |
| 5. Biological formulation | 100 | 18.02b | 45.33 | 14.65a | 25.70 |
| 6. Biological formulation | 125 | 6.05b | 81.66 | 3.43b | 82.60 |
| VC (%) | | 35.35 | - | 63.64 | - |
| Averages | | 18.72 | - | 13.02 | - |

| | | | | | |
|---|---|---|---|---|---|
| g.c.p.ha⁻¹: grams of commercial product per hectare; DAS: days after sowing in a relationship between the final population (Fp) of nematodes and the initial population (Ip) in 150 cm³ and 10 g of root (average of four repetitions); averages followed by the same letter do not differ from one another in the columns for the Scott-Knott test (p≤0.05); Data changed by arc sin (x); E (%): effectiveness of the treatments according to Abbott (1925); VC (%): variation coefficient. | | | | | |

**- Table 7. Productivity and weight of a thousand grains of soy (Glycine max), cultivar NA 5909 RG, as a function of the applied treatments. Uberlândia, MG, 2017.**

| Treatments | Doses | Productivity | |
|---|---|---|---|
| | g.c.p.ha⁻¹ | Kg.ha⁻¹ | IR |
| | | M | % |
| 1. Standard | - | 5405.35a | - |
| 2. Biological formulation | 25 | 5115.60a | 0 |
| 3. Biological formulation | 50 | 5026.82a | 0 |
| 4. Biological formulation | 75 | 5348.26a | 0 |
| 5. Biological formulation | 100 | 5590.58a | 3.42 |
| 6. Biological formulation | 125 | 5217.43a | 0 |
| VC (%) | | 9.29 | - |
| Averages | | 4374.49 | - |

| | | | |
|---|---|---|---|
| g.c.p.ha⁻¹: grams of commercial product per hectare; kg.ha⁻¹: kilogram per hectare; IR: increment in the productivity in relation to standard; m:average of four repetitions; +averages followed by the same letter do not differ from one another in the columns for the Scott-Knott test (p≤0.05); Data changed by √(x *+* 1.0); VC (%): variation coefficient. | | | |

In accordance with the results attained, the biological formulation exhibits nematode efficiency control in boughs *(Meloidogyne incognita)* in soy plants, and can be used in the control of this pest.

### Conclusions

None of the evaluated treatments caused phytotoxicity to soy plants *(Glycine max),* cultivar NA 5909 RG. The treatments with the biological formulation at doses of 50, 75, 100 and 125 g.ha⁻¹ exhibited a control of nematodes in boughs *(Meloidogyne incognita),* with a reduction of 25.62 to 86.30% and of 38.20% to 73.64% in the number of young and/or adult plants in the soil and the root, respectively. Further, it reduced the reproduction factor by 45.33 to 82.60%, and can be considered as an efficient tool in the pest control of soy plants.

### - Example 2: Control of Pratylenchus brachyurus in soy plants. by treating the seeds.

### Object

To evaluate the effect under field conditions of the biological formulation containing bactericides for controlling *Pratylenchus brachyurus* applied by way of treating the seeds.

### Material and Methods

Experimental layout: the experimental layout use was: casualized blocks, with six treatments and six repetitions (36 portions). The experimental portions were 3.6 m wide (eight cultivation lines) and 2.5 m long, totaling a 9.0 m² area. When required, the data of the evaluations were changed and submitted to the variance analysis. The comparisons between the averages were made by the Scott-Knott test (p<0.05) (1974), and the effectiveness of the treatments was calculated according to ABBOTT (1925).

Treatments and form of application: The products in the study were used to treat soy seeds, cultivar NA 5909 RG. For the treatment of the seeds, the application volume used was 500 ml of broth per 10 kg of seeds", to which water was added at the prescribed dose of the product, until the volume of 3.0 ml was reached. Then, 500 g of soy seeds were added in a plastic bag together with 3.0 ml of the mixture (product + water). Said bag was closed and agitated until the products turned fully homogenized. A sample of approximately 100 grams of each treatment was removed and sent to Laboratério de Análises de Sementes credited by the Ministério da Agricultura Pecuária e Abastecimento - MAPA - for the germination tests. Soil and root samples were collected randomly from five distinct points of the useful portion that made out a compound sample, with approximately 500 g of soil and 10 g of root. The collections were carried out at a depth of 0-20 cm. For the quantification of eggs and younglets of *P. brachyurus,* the samples of each experimental portion were sent to the Nematology Laboratory so that *P. brachyurus* younglets and eggs could be quantified. The extration of the target in the soil was carried out using the centrifugal flotation technique in a sucrose solution proposed by JENKIS

(1964) in 150 cm³ of soil, wherein the evaluations had been made previously 30 and 60 days after sowing. For the quantification of nematodes in the root, the liquefier technique proposed by COOLEN & D'HERDE (1972) was used in 10 g of root, wherein the evaluations had been made 30 and 60 DAS. The reproduction factor (RF) was calculated, that is, the relationship between the final population (Fp) and the initial population (Ip) of nematodes, between 30 and 60 days after sowing, according to the formula proposed by OOSTENBRINK (1966), where FR = Fp/Ip. When the plants bloomed (R3), the height of 10 plants in the center of each experimental portion was evaluated, by measuring the length of the stem from the soil level to the last leaf of the plant, with the aid of a measuring device. To estimate the productivity of the crop in kilograms per hectare, the grains were harvested and weighed in 4 m² and the humidity was set to 13%.

### Results and Discussion

In the previous monitoring and along the evaluations, the presence of natural enemies has not been detected in significant amounts and frequency in the plants of the experimental area, thus making it impossible to estimate the effect of the treatments in a study on the dynamics of this population. Further, it was verified that there was no phytotoxicity caused by the application of the treatments in the study that would compromise the growth and development of soy plants (Table 8).

**- Table 8. Phytotoxicity of the treatments applied to soy plants (Glycine max), cultivar NA 5909 RG, along the evaluations..Jatal, GO, 2017.**

| Treatments | Doses | Phytotoxicity | | | |
|---|---|---|---|---|---|
| | g.c.p.ha⁻¹ seeds | 3 DAE | 7 DAE | 10 DAE | 14 DAE |
| | | M | | | |
| 1. Standard | - | 0 | 0 | 0 | 0 |
| 2. Biological formulation | 0.45 | 0 | 0 | 0 | 0 |
| 3. Biological formulation | 0.90 | 0 | 0 | 0 | 0 |
| 4. Biological formulation | 1.40 | 0 | 0 | 0 | 0 |
| 5. Biological formulation | 2.00 | 0 | 0 | 0 | 0 |
| 6. Biological formulation | 2.50 | 0 | 0 | 0 | 0 |
| Averages | | 0 | 0 | 0 | 0 |

| | | | | | |
|---|---|---|---|---|---|
| g.c.p.kg⁻¹ seeds: grams of commercial product per kilogram of seeds; m: phytotoxicity notes; DAE: days after emergence. | | | | | |

In the evaluations of the height of plants (Table 9), the applied treatments were not statistically differed from the standard, wherein the height of plants ranged from 35.62 to 39.53 cm.

**- Table 9. Height of soy plants (Glycine max), cultivar NA 5909 RG. Jataí, GO, 2017.**

| Treatments | Doses | Height of plants (cm) |
|---|---|---|
| | g.c.p.kg⁻¹ seeds | 50 DAS |
| | | m |
| 1. Standard | - | 36.10a |
| 2. Biological formulation | 0.45 | 39.08a |
| 3. Biological formulation | 0.90 | 39.53a |
| 4. Biological formulation | 1.40 | 35.72a |
| 5. Biological formulation | 2.00 | 35.62a |
| 6. Biological formulation | 2.50 | 38.97a |
| VC (%) | | 10.62 |
| Averages | | 31.54 |

| | | |
|---|---|---|
| g p.c.kg⁻¹ seeds: grams of commercial product per kilogram of seeds; DAS: days after sowing; m: average of 10 plants per useful portion (average of six repetitions); +averages followed by the same letter do not differ from one another in the columns for the Scott-Knott test (p<0,05); VC (%): variation coefficient. | | |

In the evaluations of the effect of the applied treatments on the number of young and/or adult plants in 150 cm³ of soil (Table 10), at the 30^{th} day after sowing no statistical differences between the standard and the evaluated doses of the biological formulation have been noticed. However, the product in the study has provided a control efficiency of up to 65.38%, when compared with the standard. At the 60^{th} day after sowing, the biological mixture in doses of 0.90, 1.40 and 2.00 g.c.p.kg⁻¹ seeds had provided an efficient control of the population of nematodes in the soil with an efficiency ranging from 61.93% to 80.96%, statistically different from the standard treatments, and a higher dose of the biological formulation (0.45 and 2.50 g.c.p.kg⁻¹ seeds, respectively).

**- Table 10. Effect of the applied treatments for control of nematodes in lesions (Pratylenchus brachyurus) in soy plants (Glycine max) on the number of young and/or adult plants in 150 cm³ of soil, and effectiveness of the treatments along the evaluations. Jataí, GO, 2017.**

| Treatments | Doses | Number of young and/or adult plants. 150 cm⁻³ of soil | | | | | | | |
|---|---|---|---|---|---|---|---|---|---|
| | g.c.p.kg⁻¹ seeds | Previous | | 30 DAS | | | 60 DAS | | |
| | | m | | M | | E(%) | M | | E(%) |
| 1. Standard | - | 38.67+ | a | 41.60 | A | - | 58.83 | a | - |
| 2. Biological formulation | 0.45 | 53.33 | a | 30.67 | a | 26.28 | 41.60 | a | 29.29 |
| 3. Biological formulation | 0.90 | 24.00 | a | 49.60 | a | 0.00 | 14.67 | b | 75.07 |
| 4. Biological formulation | 1.40 | 24.00 | a | 30.67 | a | 26.28 | 11.20 | b | 80.96 |
| 5. Biological formulation | 2.00 | 58.67 | a | 14.40 | a | 65.38 | 22.40 | b | 61.93 |
| 6. Biological formulation | 2.50 | 25.33 | a | 19.20 | a | 53.85 | 26.67 | a | 54.67 |
| VC (%) | | 31.42 | | 35.76 | | - | 50.27 | | - |
| Averages | | 37.36 | | 31.02 | | - | 29.23 | | - |

| | | | | | | | | | |
|---|---|---|---|---|---|---|---|---|---|
| g.c.p.kg⁻¹ seeds: grams of commercial product per kilogram of seeds; DAS: days after sowing; m: number of young and/or adult plants in 150 cm³ of soil (average of six repetitions); +averages followed by the same letter do not differ from one another in the columns for the Scott-Knott test (p<0.05); E (%): effectiveness of the treatments according to Abbott; VC (%): variation coefficient. | | | | | | | | | |

Table 11 shows the effect of the applied treatments on the number of young and/or adult plants in 10 g of root. At the 30^{th} day after sowing, the biological formulation in doses of 1.40 and 2.50 g.c.p.kg-1 of seeds was superior to standard treatments, acting positively in the control of phytonematodes in lesions and exhibiting a control efficiency between 37.68 and 60.89%, respectively. At the 60^{th} day after sowing, a higher reduction in the number of phytonematodes in the roots was observed, showing a significant difference between the standard treatments and the lower dose (0.45 g.c.p.kg⁻¹ seeds). Doses of 0.90, 1.40, 2.00 and 2.50 g.c.p.kg⁻¹ seeds of the biological formulation showed efficiencies that ranged from 55.54% to 82.13% (Table 11).

The high efficiency of the biological formulation in the control of phytonematodes in the roots occurs to the detriment of the characteristics of the microorganisms of the composition. Said microorganisms colonize the rhizosphere and reduce the penetration of nematodes into the roots, due to the action of nematicidal metabolites produced by bacteria, or the reduction of the chemical signalling exudated by the plants, that guide the nematodes towards the roots (SIDDIQUI & MAHMOOD, 1999).

**- Table 11. Effect of the applied treatments for control of nematode in lesions (Pratylenchus brachyurus) in soy plants (Glycine max) on the number of young and/or adult plants in 10 g of root, and effectiveness of the treatments along the evaluations. Jataí, GO, 2017.**

| Treatments | Doses | Number of young and/or adult plants. 10 g⁻¹ of root | | | | | |
|---|---|---|---|---|---|---|---|
| | g.c.p.kg⁻¹ seeds | 30 DAS | | | 60 DAS | | |
| | | M | | E (%) | M | | E (%) |
| 1. Standard | - | 760.00+ | a | - | 562.80 | a | - |
| 2. Biological formulation | 0.45 | 640.80 | a | 15.68 | 321.60 | a | 42.86 |
| 3. Biological formulation | 0.90 | 585.60 | a | 22.95 | 250.20 | b | 55.54 |
| 4. Biological formulation | 1.40 | 473.60 | b | 37.68 | 156.80 | b | 72.14 |
| 5. Biological formulation | 2.00 | 680.70 | a | 10.43 | 132.80 | b | 76.40 |
| 6. Biological formulation | 2.50 | 297.22 | B | 60.89 | 100.56 | b | 82.13 |
| VC (%) | | 35.28 | | - | 42.27 | | - |
| Averages | | 572.99 | | - | 254.13 | | - |

| | | | | | | | |
|---|---|---|---|---|---|---|---|
| g.c.p.kg⁻¹ seeds: grams of commercial product per kilogram of seeds; DAS: days after sowing; m:number of young and/or adult plants in 10 g of root (average of six repetitions); +averages followed by the same letter do not differ from one another in the columns for the Scott-Knott test (p≤0.05); E (%): effectiveness of the treatments according to Abbott; VC (%): variation coefficient. | | | | | | | |

The consequences of the control of phytonematode in lesions on the reproduction factor is presented in Table 12. 30 and 60 after the sowing, the biological mixture in doses of 2.00 and 2.50 g.c.p.kg⁻¹ seeds has promoted significantly the reduction of the reproduction factor, exhibiting an efficiency of 63.63% and 57.67% 30 and 60 days after the sowing, and 80.39% and 68.40% 60 days after sowing, respectively, indicating that at such doses (2.00 and 2.50 g.c.p.kg⁻¹ seeds) the product is efficient in preventing the population of nematodes in lesions from increasing significantly, both in the soil and in the roots.

**- Table 12. Effect of the applied treatments for control of nematodes in lesions (Pratylenchus brachyurus) in soy plants (Glycine max) on the reproduction factor and effectiveness of the treatments along the evaluations. Jataí, GO, 2017.**

| Treatments | Doses | Reproduction factor | | | | | |
|---|---|---|---|---|---|---|---|
| | g.c.p.kg⁻¹ seeds | 30 DAS | | | 60 DAS | | |
| | | M | | E (%) | M | | E (%) |
| 1. Standard | - | 32.41+ | a | - | 17.01 | a | - |
| 2. Biological formulation | 0.45 | 19.21 | a | 40.72 | 7.70 | a | 54.76 |
| 3. Biological formulation | 0.90 | 38.80 | a | 0.00 | 11.67 | a | 31.41 |
| 4. Biological formulation | 1.40 | 25.78 | a | 20.46 | 8.06 | a | 52.62 |
| 5. Biological formulation | 2.00 | 11.79 | b | 63.63 | 3.34 | b | 80.39 |
| 6. Biological formulation | 2.50 | 13.72 | b | 57.67 | 5.38 | b | 68.40 |
| VC (%) | | 23.90 | | - | 36.18 | | - |
| Averages | | 23.62 | | - | 8.86 | | - |

| | | | | | | | |
|---|---|---|---|---|---|---|---|
| g.c.p.kg⁻¹ seeds: grams of commercial product per kilogram of seeds; DAS: days after sowing in a relationship between the final population (Fp) of nematodes and the initial population (Ip) in 150 cm³ and 10 g of root (average of six repetitions); +averages followed by the same letter do not differ from one another in the columns for the Scott-Knott test (p≤0.05); E (%): effectiveness of the treatments according to Abbott; VC (%): variation coefficient. | | | | | | | |

As to the productivity of the culture, no statistical difference between the applied treatments and the standard has been noticed. However, the treatments with the biological formulation had provided increments of 6.65 to 22.65% in the productivity of the crop (Table 13). The same trend was observed in the evaluation of the weight of 1.000 grains, where no significant difference between the treatments has been noticed.

**- Table 13. Productivity and weight of a thousand grains of soy plants (Glycine max), cultivar NA 5909 RG, as a function of the applied treatments. Jataí, GO, 2017.**

| Treatments | Doses | Productivity | | Weight of 1,000 grains (g) |
|---|---|---|---|---|
| | g.c.p.kg⁻¹ seeds | Kg.ha⁻¹ | | |
| | | m | IR (%) | m |
| 1. Standard | - | 2569.66a | - | 156.20a |
| 2. Biological formulation | 0.45 | 1740.60a | 6.65 | 155.50a |
| 3. Biological formulation | 0.9 | 2930.78a | 14.05 | 158.91a |
| 4. Biological formulation | 1.4 | 2890.52a | 12.49 | 157.38a |
| 5. Biological formulation | 2.0 | 2857.38a | 11.20 | 154.71a |
| 6. Biological formulation | 2.5 | 3151.78a | 22.65 | 157.68a |
| VC (%) | - | 15.66 | | 4.0 |
| Averages | - | 2427.42 | | 156.73 |

| | | | | |
|---|---|---|---|---|
| g.c.p.kg⁻¹ seeds: grams of commercial product per kilogram of sementes; kg.ha⁻¹: kilogram per hectare; IR: increment in the productivity in relation to the standard; m: average of four repetitions; +averages followed by the same letter do not differ from one another in the columns for the Scott-Knott test (p<0.10); VC (%): variation coefficient. | | | | |

In view of the above, though significant effects on the promotion of the plant growth, productivity and weight of 1.000 grains have not been noticed, the biological mixture was efficient in the reduction of the population nematodes in root lesions, both in the soil and in the roots, and interfered negatively with the reproduction factor of same. The biological formulation can be included in programs for handling said nematode.

### Conclusions

None of the evaluated treatments caused phytotoxicity to soy plants (*Glycine max*)*,* cultivar NA 5909 RR. The treatments using the biological formulation, when applied in doses of 0.90, 1.40, 2.00 and 2.50 g.c.p.kg⁻¹ seeds, is efficient in the control of the population of nematodes in lesions in the soil by 80.96% and in the roots by 82.13%, and is also efficient in lowering the reproduction factor of nematodes by 80.39% compared to the standard, and thus it can be considered as an efficient tool in the fight against nematode *Pratylenchus brachyurus.*

The preparation of the formulation for biological control of phytonematodes should follow the following flow of events:
- Raw material: the raw materials that will make out the product should be received and manipulated by trained people;
- Mixture: the raw materials should be weighed and mixed according to the standard operational procedure (SOP) in the indicated ranges;
- Sampling: after being mixed, samples should be taken for verification and product warranty certification. The number of colony forming units (c.f.u.)/g of product should be analyzed;
- Packing: the formulated product complying with the guarantee specifications should be packed in previously labeled plastic bottles or pouches of 1.0, 5.0 and 10.0 kg. The bottles or pouches should be closed with a cover or sealed;
- Storage: the bottles are deployed on pallets and stored in a dry, aired and light protected site, and shall remain in said condition until they are sent away.

The present invention may be applied either by using plantation furrows, planting bars, treatment of seeds or even treatment of industrial seed by sowing machines for the control of phytonematodes. The application method will have to be analyzed case by case and will depend on the technical conditions and needs of each producer.

The scope of the present patent application shall not be limited by the working examples, but to the terms defined in claims.

### BIBLIOGRAPHICAL REFERENCES

ABBOTT, W.S. A method of computing the effectiveness of an insecticide. Journalof Economy Entomology, New York, v. 18, n. 1, p. 265-267, 1925.
Araújo, FF. 2008. Inoculação de sementes com Bacillus subtilis, formulado com farinha de ostra e desenvolvimento de milho, soja e algodão. Ciências e Agrotecnologia, Lavras, v. 2, p. 456-462.
ARAÚJO, F. F.; SILVA, J. F. V.; ARAÚJO, A. S. F. Influência de Bacillus subtilis na eclosão, orientação e infecção de Heteradera glycines em soja. Ciência Rural, Santa Maria, v. 32, n. 2, p. 197-203,2002.
Bird DM, Opperman CH, Davies KG. 2003. Interactions between bactéria and plant-parasitic nematodes: now and then. Int. J. Parasitol. 33:1269-1276.
COOLEN, W. A.; D'HERDE, C. J. A method for the quantitative extraction of nematodes [rom plant tissue. Ghent, State Nematology and Entomology Research Station, 1972. 77p.
Hallmann J, Faupel A, Krechel A, Sikora RA, Berg G. 2004. Endophytic bacteria and biological control of nematodes. Bulletin OILB/SROP. 27:83-94.
Hasky-Günther K, Hoffmann-Hergarten 5, Sikora RA. 1998. Resistance against the potato cyst nematode Globodera pallida systemically induced by the rhizobacteria Agrabacterium radiobacter (G12) and Bacillus sphaericus (B43). Fund. Appl. Nematol. 21:511-517.
Higaki WA. 2012. Bacillus subtilis e abamectina no controle de Rotylenchulus reniformis e Pratylenchus brachyurus e alterações fisiológicas em algodoeiro em condições controladas. Dissertação (Mestrado em Agronomia) - Universidade do Oeste Paulista - Unoeste: Presidente Prudente - SP.
Higaki WA; Araujo FF. Bacillus subtilis e abamectina no controle de nematoides e alterações fisiológicas em algodoeiro cultivado em solos naturalmente infestados. Nematrapica Vol. 42, No. 2, p. 295-303. 2012
JENKINS, W. R. A rapid centrifugal-flotation technique for separating nematodes from soil. Plant Diasease Report, v. 48, 1964. p. 692.
LUZ, W. C. Rizobactérias promotoras de crescimento de plantas e bioproteção. Revisão Anual de Patologia de Plantas (RAPP), Passo Fundo, v. 4, n. 1, p. 1-49, 1996. OOSTENBRINK, M. Major characteristics of the relation between nematodes and plants. Mededelingen Van de landbouwhogeschool te waqeninqen, Nederland, v. 66, n. 4, p. 1-46, 1966.
SIDDIQUI, Z. A.; MAHMOOD, I. Role of bacteria in the management of plant parasitic nematodes: a review. Bioresource Technology, v. 69, n. 2, p. 167-179, 1999.
LUZ, W. C. Rizobactérias promotoras de crescimento de plantas e bioproteção. Revisão Anual de Patologia de Plantas (RAPP), Passo Fundo, v. 4, n. 1, p. 1-49, 1996.
Sikora RA Hoffmann-Hergaten S. 1992. Importance of plant health-promoting rhizobacteria for the control of soil-borne fungal diseases and plant parasitic nematodes. Arab. J. Plant Prato 10:48-53.
Sikora RA Padgham JL. 2007. Biological control potential and modes of action of Bacillus megaterium against Meloidogyne graminicola on rice. Crop Protection 26:971- 977.
Zucchi TD, Moraes LAB, Melo IS. 2008. Streptomyces sp. ASBV-I reduces aflatoxin accumulation by Aspergillus parasiticus in peanut grain. J. Appl. Microbiol. 105:2153- 2160.

## Claims

1. COMPOSITION FOR BIOLOGICAL CONTROL OF PHYTONEMATODES, more precisely a composition with nematicidal effect in damage mitigation and control of phytonematodes on cultivable plants; **characterized by** consisting of microorganisms, in colony forming units, c.f.u./g at a concentration being:
*Bacillus subtilis -* 1.0 x 10¹⁰ c.f.u./g;
*Bacillus licheniformis -* 1.0 x 10¹⁰ c.f.u./g;
*Bacillus amyloliquenfacies -* 1.0 x 10⁶ c.f.u./g;
at the following concentrations:
*Bacillus subtilis -* 1.0 to 20.0%, by weight;
*Bacillus licheniformis -* 1.0 to 20.0%, by weight;
*Bacillus amyloliquefaciens -* 1.0 to 10.0%, by weight;
and
additives - 1.0 to 20.0%, by weight, being selected from the group consisting of dispersants selected from the group consisting of water-soluble ionic polymers, water-soluble anionic polymers, and surfactants selected from the group consisting of anionic surfactants and non-ionic surfactants, and combinations thereof;
excipients - 95.0 to 10.0%, by weight, being selected from the group consisting of silicas, talc, bentonite, carbohydrates, carbonates, milk , powder milk, and combinations thereof.

2. COMPOSITION FOR BIOLOGICAL CONTROL OF PHYTONEMATODES, according to claim 1, **characterized in that** the composition is suitable for use as a wettable powder formulation, emulsions, concentrated suspensions and granules.

3. COMPOSITION FOR BIOLOGICAL CONTROL OF PHYTONEMATODES, according to claim 1, **characterized by** consisting of:
- 7.0%, by weight, of *Bacillus subtilis -* 1,0 x 10¹⁰ u.f.c./g;
- 7.0%, by weight, of *Bacillus licheniformis -* 1,0 x 10¹⁰ u.f.c./g;
- 4.5%, by weight, of *Bacillus amyloliquenfacies -* 1,0 x 10⁶ u.f.c./g;
- additives being 3.0%, by weight, acrylic styrene polymer and 1.0% anionic surfactant by weight; and
- 67.5% by weight of inert excipient.

## Patentansprüche

1. Zusammensetzung zur biologischen Bekämpfung von Phytonematoden, nämlich Zusammensetzung mit nematizider Wirkung zur Schadensbegrenzung und Bekämpfung von Phytonematoden auf Kulturpflanzen; **dadurch gekennzeichnet, dass** sie aus Mikroorganismen, in koloniebildenden Einheiten, KBE/g, in folgender Konzentration:
*Bacillus subtilis -* 1,0 x 10¹⁰ KBE/g;
*Bacillus licheniformis -* 1,0 x 10¹⁰ KBE/g;
*Bacillus amyloliquenfacies - 1,0* x 10⁶ KBE/g;
in den folgenden Konzentrationen:
*Bacillus subtilis -* 1,0 bis 20,0 Gew.-%;
*Bacillus licheniformis -* 1,0 bis 20,0 Gew.-%;
*Bacillus amyloliquefaciens -* 1,0 bis 10,0 Gew.-%;
und
Zusatzstoffen - 1,0 bis 20,0 Gew.-%, ausgewählt aus der Gruppe bestehend aus Dispergiermitteln, ausgewählt aus der Gruppe bestehend aus wasserlöslichen ionischen Polymeren, wasserlöslichen anionischen Polymeren, und Tensiden, ausgewählt aus der Gruppe bestehend anionischen Tensiden und nichtionischen Tensiden, sowie Kombinationen davon;
Hilfsstoffen - 95,0 bis 10,0 Gew.-%, ausgewählt aus der Gruppe bestehend aus Kieselerde, Talkum, Bentonit, Kohlenhydraten, Karbonaten, Milchserum, Milchpulver und Kombinationen davon.

2. Zusammensetzung zur biologischen Bekämpfung von Phytonematoden nach Anspruch 1, **dadurch gekennzeichnet, dass** die Zusammensetzung zur Verwendung als benetzbare Pulverformulierung, Emulsionen, konzentrierte Suspensionen und Granulate bestimmt ist.

3. Zusammensetzung zur biologischen Bekämpfung von Phytonematoden nach Anspruch 1, **dadurch gekennzeichnet, dass** sie aus Folgenden besteht:
- 7,0 Gew.-% *Bacillus subtilis -* 1,0 x 10¹⁰ KBE/g;
- 7,0 Gew.-% *Bacillus licheniformis -* 1,0 x 10¹⁰ KBE/g;
- 4,5 Gew.-% *Bacillus amyloliquenfacies -* 1,0 x 10⁶ KBE/g;
- Zusatzstoffe bei 3,0 Gew.-% Acryl-Styrol-Polymer und 1,0 Gew.-% anionisches Tensid; und
- 67,5 Gew.-% inerter Hilfsstoff.

## Revendications

1. COMPOSITION POUR LA LUTTE BIOLOGIQUE CONTRE LES PHYTONÉMATODES, plus précisément une composition à effet nématicide pour l'atténuation des dommages et la lutte contre les phytonématodes sur des plantes cultivables ; **caractérisée en ce qu'**elle consiste en micro-organismes, dans des unités formant des colonies, c.f.u./g à une concentration de :
*Bacillus subtilis -* 1,0 x 10¹⁰ c.f.u./g ;
*Bacillus licheniformis -* 1,0 x 10¹⁰ c.f.u./g ;
*Bacillus amyloliquenfacies -* 1,0 x 10⁶ c.f.u./g ;
aux concentrations suivantes :
*Bacillus subtilis -* 1,0 à 20,0 %, en poids ;
*Bacillus licheniformis -* 1,0 à 20,0 %, en poids ;
*Bacillus amyloliquefaciens -* 1,0 à 10,0 %, en poids ;
et
des additifs - 1,0 à 20,0 %, en poids, étant choisis dans le groupe consistant en agents dispersants choisis dans le groupe consistant en polymères ioniques hydrosolubles, polymères anioniques hydrosolubles, et tensioactifs choisis dans le groupe consistant en tensioactifs anioniques et tensioactifs non ioniques, et des combinaisons de ceux-ci ;
des excipients - 95,0 à 10,0 %, en poids, étant choisis dans le groupe consistant en silices, talc, bentonite, glucides, carbonates, sérum de lait, lait en poudre, et des combinaisons de ceux-ci.

2. COMPOSITION POUR LA LUTTE BIOLOGIQUE CONTRE LES PHYTONÉMATODES, selon la revendication 1, **caractérisée en ce que** la composition est appropriée pour être utilisée en tant que formulation pulvérulente mouillable, émulsions, suspensions concentrées et granulés.

3. COMPOSITION POUR LA LUTTE BIOLOGIQUE CONTRE LES PHYTONÉMATODES, selon la revendication 1, **caractérisée en ce qu'**elle consiste en :
- 7,0 %, en poids, de *Bacillus subtilis -* 1,0 x 10¹⁰ u.f.c./g ;
- 7,0 %, en poids, de *Bacillus licheniformis -* 1,0 x 10¹⁰ u.f.c./g ;
- 4,5 %, en poids, de *Bacillus amyloliquenfacies -* 1,0 x 10⁶ u.f.c./g ;
- des additifs étant 3,0 %, en poids, de polymère acrylique styrène et 1,0 % de tensioactif anionique en poids ; et
- 67,5 % en poids d'un excipient inerte.
